## Europäisches Patentamt

(19) **European Patent Office**

**Office européen des brevets**

(11) Veröffentlichungsnummer: **0 047 380**
**B1**

---

(12) # EUROPÄISCHE PATENTSCHRIFT

(45) Veröffentlichungstag der Patentschrift:
**13.04.83**

(51) Int. Cl.³: **C 09 D 5/08,** C 08 L 9/08,
C 08 L 25/10

(21) Anmeldenummer: **81105660.5**

(22) Anmeldetag: **18.07.81**

(54) Wässrige emulgatorarme Dispersionen von Carboxylgruppen aufweisenden Butadien-Styrol-Emulsionscopolymerisaten und ihre Verwendung als Bindemittel für Korrosionsschutzfarben.

(30) Priorität: **03.09.80 DE 3033121**

(43) Veröffentlichungstag der Anmeldung:
**17.03.82 Patentblatt 82/11**

(45) Bekanntmachung des Hinweises auf die Patenterteilung:
**13.04.83 Patentblatt 83/15**

(84) Benannte Vertragsstaaten:
**AT BE CH DE FR GB IT LI NL SE**

(56) Entgegenhaltungen:
**GB-A-1 033 129**
**US-A-3 586 519**

(73) Patentinhaber: **BASF Aktiengesellschaft,**
**Carl-Bosch-Strasse 38, D-6700 Ludwigshafen (DE)**

(72) Erfinder: **Distler, Dieter, Dr., Pfalzring 159,**
**D-6704 Mutterstadt (DE)**
Erfinder: **Melan, Michael, Dr., Hans-Willmann-Strasse 4,**
**D-6706 Wachenheim (DE)**

BUNDESDRUCKEREI BERLIN

**Wäßrige emulgatorarme Dispersionen von Carboxylgruppen aufweisenden Butadien-Styrol-Emulsionscopolymerisaten und ihre Verwendung als Bindemittel für Korrosionsschutzfarben**

Die Erfindung betrifft wäßrige emulgatorarme Dispersionen von Carboxylgruppen aufweisenden Butadien-Styrol-Emulsionscopolymerisaten und ihre Verwendung als Bindemittel in wäßrigen Korrosionsschutzfarben.

Als Bindemittel für Korrosionsschutzfarben werden z. B. wäßrige Dispersionen von Styrol-Acrylat-Copolymerisaten, Butadien-Styrol-Copolymerisaten sowie von Carboxylgruppen aufweisenden Butadien-Styrol-Copolymerisaten eingesetzt. Dabei ist es beim Einsatz von Styrol-Acrylat-Copolymerisat-Dispersionen erforderlich, den Korrosionsschutzfarben aktive Korrosionsschutzpigmente, wie besonders Zinkchromate zuzusetzen (vgl. Merkblatt der BASF Aktiengesellschaft »Acronal 290 D als Bindemitteldispersion für Metallanstriche«). Ein derartiger Zusatz an aktivem Korrosionsschutzpigment verhindert wirksam das »Blitzrosten«. Außerdem wird durch ein derartiges aktives Korrosionsschutzpigment auch die Blasenbildung, insbesondere bei einer Salzbesprühung (Salzsprühtest) verhindert. Andere als aktive Korrosionsschutzpigmente vorgeschlagene Stoffe als Zinkchromate sind weniger wirksam. Als solche kommen z. B. die in der GB-A-1 450 916 genannten Metallkomplexverbindungen in Frage, die dort auch für Korrosionsschutzfarben vorgeschlagen werden, die Butadien-Styrol-Copolymerisat-Dispersionen als Bindemittel enthalten. Die Verwendung von Zinkchromaten als aktive Korrosionsschutzpigmente ist jedoch nicht unbedenklich, da diese toxisch wirken. In Korrosionsschutzfarben auf Basis wäßriger Dispersionen von Butadien-Styrol-Copolymerisaten sind zwar Zinkchromate als aktive Korrosionsschutzpigmente nicht erforderlich, doch erhält man mit derartigen Rostschutzfarben nur mit verhältnismäßig dicken Anstrichen, d. h. mit Anstrichen einer Dicke von im allgemeinen über 70 μm, meistens über 100 μm, einen befriedigenden Rostschutz im Salzsprühtest nach DIN 50 021.

Aufgabe der vorliegenden Erfindung sind somit wäßrige Dispersionen von Butadien-Styrol-Emulsionscopolymerisaten, die ohne Mitverwendung von aktiven Korrosionsschutzpigmenten als Bindemittel in Korrosionsschutzfarben auch Metallschutzanstriche ergeben, die einen verbesserten Rostschutz aufweisen.

Es wurde nun gefunden, daß wäßrige emulgatorarme Dispersionen von Carboxylgruppen aufweisenden Butadien-Styrol-Emulsionscopolymerisaten, die

(a)  35 bis 55 Gew.-%  Butanien,

(b)  35 bis 60 Gew.-%  Styrol,

(c)  1 bis 3 Gew.-%  $\alpha,\beta$-monoolefinisch ungesättigte, 3 bis 6 C-Atome enthaltende Mono- und/oder Dicarbonsäuren,

(d)  1 bis 3 Gew.-%  Amide $\alpha,\beta$-monoolefinisch ungesättigter, 3 bis 5 C-Atome enthaltender Mono- und/oder Dicarbonsäuren,

(e)  1 bis 4 Gew.-%  N-Methylolamide $\alpha,\beta$-monoolefinisch ungesättigter, 3 bis 5 C-Atome enthaltender Mono- und/oder Dicarbonsäuren oder deren Alkyläther und

(f)  1 bis 3 Gew.-%  Acryl- und/oder Methacrylsäuremonoester von 2 bis 6 C-Atome enthaltenden Alkandiolen

einpolymerisiert enthalten und die als Emulgator nur 0,1 bis 0,8 Gew.-%, bezogen auf die Emulsionscopolymerisate, 12 bis 16 C-Atome in den Alkylgruppen aufweisende Alkylbenzolsulfonate und/oder Fettalkoholsulfonate enthalten, besonders gut als Bindemittel für wäßrige Korrosionsschutzfarben geeignet sind. Derartige Korrosionsschutzfarben weisen schon bei verhältnismäßig dünnen Anstrichen einer Dicke von meist unter 70 μm auf Stahlblechen ohne Zusatz von aktiven Korrosionsschutzpigmenten eine hervorragende Rostschutzwirkung im Salzsprühtest auf, die die Rostschutzwirkung vergleichbarer Korrosionsschutzfarben auf Basis von Styrol-Acrylat-Copolymerisat-Dispersionen, die Zinkchromate enthalten, erreicht und die Rostschutzwikrung von Korrosionsschutzfarben auf Basis von üblichen wäßrigen Dispersionen von carboxylierten Butadien-Styrol-Copolymerisaten übertrifft. Die wäßrigen emulgatorarmen Dispersionen der speziellen Carboxylgruppen aufweisenden Butadien-Styrol-Emulsionscopolymerisate sind neu. Sie können unter Einsatz der Monomeren (a) bis (f) und der Alkylbenzolsulfonate und/oder der Fettalkoholsulfonate durch chargenweise oder kontinuierliche Emulsionscopolymerisation unter den üblichen Druck- und Temperaturbedingungen unter Einsatz der üblichen Mengen Polymerisationsinitiatoren hergestellt werden. Vorzugsweise arbeitet man dabei nach dem sogenannten Emulsions-Zulaufverfahren, bei dem die Monomeren (c) bis (f) in einem Teil der wäßrigen Phase gelöst und zusammen mit den Monomeren (a) und (b) in emulgierter Form zum Teil vorgelegt und der Rest nach Maßgabe des Verbrauchs der Monomeren zu der wäßrigen Vorlage zugefahren wird. Verwendet man dabei wasserlösliche Persulfate, wie Alkali- oder Ammoniumperoxodisulfat als Polymerisationsinitiatoren in Mengen von 0,2 bis 1, insbesondere von 0,2 bis 0,6 Gew.-%, bezogen auf die Monomeren, so arbeitet man im allgemeinen bei einer Temperatur von 70 bis 90, vorzugsweise von 75 bis 85°C. Bei Verwendung sogenannter Redoxinitiatoren, die im allgemeinen von 0,5 bis 1 Gew.-%, bezogen auf die Monomeren, eingesetzt werden, liegt die Polymerisationstemperatur im allgemeinen zwischen 30 und 70, vorzugsweise zwischen 40 und 60°C. Geeignete Redoxkatalysator-Systeme sind z. B. Alkaliperoxodisulfate in Kombination mit Eisen-II-sulfat und Natriumbisulfit oder Ascorbinsäure als Reduktionsmittel bzw. Cumolhydroperoxid oder tert.Butylhydroperoxid mit Ascorbinsäure und Eisen-II-Salzen.

Die 12 bis 16 C-Atome im Alkylrest aufweisenden Alkylbenzolsulfonate und Fettalkoholsulfonate, die im allgemeinen im Fettalkoholrest 12 bis 16 C-Atome aufweisen, sind übliche Emulgatoren für die Emulsionspolymerisation und im Handel erhältlich. Sie werden bei der Herstellung der neuen Dispersionen im allgemeinen in Mengen von 0,1 bis 0,8 Gew.-%, bezogen auf die Monomeren bzw. die Emulsionscopolymerisate eingesetzt; ihre Menge liegt meist zwischen 0,3 und 0,5 Gew.-%, bezogen auf die Monomeren. Andere für die Emulsionscopolymerisation olefinisch ungesättigter Monomere übliche Emulgatoren sind für die Herstellung der neuen Dispersionen weniger gut geeignet.

Als Monomere (c) kommen vor allem Acrylsäure, Methacrylsäure und Itaconsäure sowie ferner Crotonsäure und Maleinsäure in Frage. Ihre Menge liegt vorzugsweise im Bereich von 1 bis 3 Gew.-%. Bevorzugte Monomere (d) sind Acrylamid und besonders Methacrylamid. Geeignete Monomere (d) sind ferner Maleinsäureamid und Fumarsäureamid sowie Crotonsäureamid. Die vorgezogene Menge der bevorzugten Monomeren (d) beträgt 1 bis 3 Gew.-%. Als Monomere (e), die vorzugsweise in Mengen von 1 bis 4 Gew.-%, bezogen auf die gesamten Monomeren, eingesetzt werden, kommen besonders N-Methylolacrylamid und -methacrylamid sowie N-Methoxymethylacrylamid und -methacrylamid sowie ferner N-n-Butoxymethylacrylamid und N,N'-Dimethylolfumarsäurediamid in Frage. Monomere (f), deren bevorzugter Anteil 1 bis 3 Gew.-%, bezogen auf die gesamten Monomeren, beträgt, sind insbesondere 2-Hydroxyethylacrylat und -methacrylat, 3-Hydroxypropylacrylat und -methacrylat, sowie 1,4-Butandiol-monoacrylat und -monomethacrylat.

Bei der Herstellung der neuen emulgatorarmen Dispersionen der speziellen, Carboxylgruppen aufweisenden Butadien-Styrol-Emulsionscopolymerisate hat es sich als Vorteil erwiesen nach Polymerisationsende, insbesondere nach dem Abkühlen der Dispersion geringe Mengen von wasserlöslichen Reduktionsmitteln, wie besonders Natrium-Formaldehydsulfoxylat oder ferner Ascorbinsäure oder Hydrazinhydrat zuzusetzen, wobei im allgemeinen eine Menge von 0,1 bis 0,5 Gew.-%, bezogen auf die Menge der Monomeren, beziehungsweise des Polymerisats angewandt wird. Durch einen derartigen Zusatz wird die Rostschutzwirkung von Korrosionschutzfarben, die mit den neuen Dispersionen als Bindemittel hergestellt sind weiter erhöht, so daß sie bei vergleichbarer Dicke im Vergleich zu üblichen carboxylierten Butadien-Styrol-Copolymerisaten als Bindemittel enthaltenden Rostschutzfarben um bis zu 40% verbessert ist. Der pH-Wert der neuen Dispersionen liegt bei ihrem Einsatz als Bindemittel für Korrosionsschutzfarben vorzugsweise bei etwa 7 und kann, soweit er von der Herstellung her diesen Wert nicht hat, leicht z. B. durch Zugabe von wäßrigem Ammoniak eingestellt werden.

Bei der Verwendung der neuen Copolymerisat-Dispersionen als Bindemittel für Rostschutzfarben kann die übliche Menge dieser Dispersion, d. h. zwischen 20 und 30 Gew.-% an Copolymerisat (fest), bezogen auf die fertige Rostschutzfarbe eingesetzt werden. Zusätzlich sind die für Rostschutzfarben üblichen Zusätze möglich, insbesondere die üblichen Verdickungsmittel, z. B. auf Basis von Vinylpyrrolidonpolymerisaten, auf Basis von Acrylsäurepolymerisaten sowie ferner auf Basis von Cellulosederivaten und übliche Pigmente, z. B. Titandioxide, Eisendioxide, Chromoxide und/oder ferner Bleioxide und Zinkoxide sowie silikatische Füllstoffe, wie Talkum, Glimmer, und/oder ferner (weniger geeignet) calcitische Füllstoffe, z. B. Kreide.

Die in den folgenden Beispielen angegebenen Teile und Prozente beziehen sich auf das Gewicht. Die in den Beispielen angegebenen Rostschutzbeständigkeiten wurden nach dem Salzsprühtest gemäß DIN 50 021 ermittelt.

Beispiel 1

Herstellung der Dispersion

In einem 150 Volumenteile fassenden Polymerisationsreaktor werden 17 Teile Wasser, 0,01 Teile Natriumformaldehydsulfoxylat und 0,001 Teile Tetranatrium-ethylendiamin-tetraacetat vorgelegt, mit Stickstoff gespült und unter Rühren auf 80°C erwärmt. Nach Erreichen dieser Temperatur läßt man 8 Teile einer Emulsion aus 26,5 Teilen Butadien, 18,5 Teilen Styrol, 1,5 Teilen Acrylsäure, 1 Teil Methacrylamid, 2,22 Teilen N-Methylolmethacrylamid (45%ige wäßrige Lösung), 1,5 Teile Hydroxyethylacrylat, 1,332 Teilen Natrium-dodecylbenzoylsulfonat (15%ige wäßrige Lösung), 0,25 Teilen tert. Dodecylmerkaptan und 22 Teile Wasser innerhalb von 3 Minuten zulaufen. Danach wird innerhalb von 2 Minuten ein Teil eines Gemisches aus 0,25 Teilen Natriumperoxydisulfat und 7 Teilen Wasser zulaufen lassen. Man rührt dann 20 Minuten bei 80°C und gibt sodann innerhalb von 5 Stunden den Rest der Monomerenemulsion und den Rest der Peroxidisulfatlösung gleichmäßig zu. Man polymerisiert noch 7 Stunden bei 80°C nach, leitet unter vermindertem Druck Wasserdampf durch und gibt anschließend eine Lösung von 0,25 Teilen Natriumformaldehydsulfoxylat in 1 Teil Wasser langsam unter Rühren zu. Anschließend wird der pH-Wert der Dispersion mit wäßrigem Ammoniak (10%ig) auf 7 gestellt.

### Prüfung der Dispersion als Bindemittel für eine Rostschutzfarbe

Die Dispersion wird als Bindemittel für folgende Rostschutzfarbe (Standardformulierung) eingesetzt:

| | |
|---|---|
| Dispersion (50%ig) | 126,0 Teile |
| Wasser | 16,2 Teile |
| Handelsübliches anionisches Dispergiermittel | 1,0 Teile |
| Ammoniak | 0,6 Teile |
| Butyldiglykolacetat | 3,0 Teile |
| Handelsübliches Verdickungsmittel (30%ige wäßrige Lösung eines Vinylpyrrolidoncopolymerisats) | 1,6 Teile |
| Titandioxid (Rutil) | 23,3 Teile |
| Eisenoxidschwarz, micronisiert | 4,7 Teile |
| Talkum | 16,3 Teile |
| Glimmer | 39,7 Teile |
| Handelsüblicher Entschäumer | 0,6 Teile |

Die Farbe wird in einer Stärke (naß) von 150−260 μm (=45−80 μm trocken) auf ein entfettetes Stahlblech aufgerakelt und der Auftrag 15 Minuten bei 70−80°C getrocknet. (Die Kanten und die Rückseite des Stahlblechs sind mit einer handelsüblichen, nichtwäßrigen Rostschutzfarbe geschützt.) Nach 3 Tagen Trocknen bei Raumtemperatur wird nach dem Salzsprühtest (DIN 50 021) geprüft. Die Beständigkeit (= keine Blasenbildung, kein Rostausbluten, Unterwanderung am Schnitt maximal 3 mm) beträgt 264 Stunden.

Wird zum Vergleich eine in sonst gleicher Weise hergestellte wäßrige Dispersion eines Copolymerisates aus 47,5 Teilen Butadien, 41,5 Teilen Styrol, 3 Teilen Acrylsäure, 3 Teilen Methacrylamid und 5 Teilen 2-Hydroxyethylacrylat in gleicher Menge als Bindemittel in der Standardformulierung an Stelle der erfindungsgemäßen Dispersion eingesetzt, so beträgt die Beständigkeit nur 144 Stunden. Bei einem weiteren Vergleich, bei dem die Bindemitteldispersion ein Copolymerisat aus 51 Teilen Butadien, 44 Teilen Styrol, 3 Teilen Acrylsäure und 2 Teilen N-Methylolmethacrylamid enthielt, betrug die Beständigkeit der Rostschutzfarbe im Salzsprühtest nur 120 Stunden.

### Beispiel 2

Wie in Beispiel 1 angegeben, wird eine wäßrige Dispersion eines Copolymerisates hergestellt, das jedoch 53 Teile Butadien, 37 Teile Styrol, 3 Teile Acrylsäure, 2 Teile Methacrylamid, 2 Teile N-Methylolmethacrylamid und 3 Teile 2-Hydroxyethylacrylat einpolymerisiert enthält. Eine damit nach den Angaben von Beispiel 1 hergestellte Rostschutzfarbe hat beim Salzsprühtest unter den in Beispiel 1 angegebenen Bedingungen eine Beständigkeit von 240 Stunden.

Rostschutzfarben, die zum Vergleich die gleiche Menge einer wäßrigen Dispersion eines Copolymerisates (a) aus 46 Teilen Butadien, 48 Teilen Styrol, 3 Teilen Acrylsäure und 3 Teilen Methacrylamid bzw. eines Copolymerisates (b) aus 40 Teilen Butadien, 56,5 Teilen Styrol, 3 Teilen Acrylsäure und 0,5 Teilen Acrylamid bzw. (c) eines handelsüblichen carboxylierten Butadien-Styrol-Copolymerisat-Latex (®Litex CA) enthielten, zeigten demgegenüber Beständigkeiten von nur (a) = 144, (b) = 96 und (c) = 72 Stunden.

### Beispiel 3

Wie in Beispiel 1 angegeben, wird eine wäßrige Dispersion eines Copolymerisates aus 45 Teilen Butadien, 48 Teilen Styrol, 1,5 Teilen Methacrylsäure, 3 Teilen Methacrylamid, 1,5 Teilen Butandiol-1,4-monoacrylat und 1 Teil N-Methylolmethacrylamid hergestellt und daraus entsprechend den Angaben in Beispiel 1 eine Rostschutzfarbe bereitet. Die Rostschutzfarbe hat im Salzsprühtest unter den in Beispiel 1 angegebenen Bedingungen eine Beständigkeit von 240 Stunden.

### Beispiel 4

Wie in Beispiel 1 angegeben, wird eine wäßrige Dispersion eines Copolymerisats aus 38 Teilen Butadien, 55,2 Teilen Styrol, 1 Teil Itaconsäure, 1 Teil Methacrylamid, 1 Teil Hexandiol-1,6-monoacrylat und 3,8 Teilen N-Methylolacrylamid unter Verwendung eines handelsüblichen $C_{12-16}$ Fettalkoholsulfonats als Emulgator unter sonst gleichen Bedingungen hergestellt. Die daraus hergestellte Rostschutzfarbe hat unter den in Beispiel 1 angegebenen Bedingungen im Salzsprühtest eine Beständigkeit von 216 Stunden.

## Patentansprüche

1. Wäßrige emulgatorarme Dispersionen von Carboxylgruppen aufweisenden Butadien-Styrol-Emulsionscopolymerisaten, dadurch gekennzeichnet, daß die Emulsionscopolymerisate

a) 35 bis 55 Gew.-% Butadien,
b) 35 bis 60 Gew.-% Styrol,
c) 1 bis 3 Gew.-% $\alpha,\beta$-monoolefinisch ungesättigte 3 bis 6 C-Atome enthaltende Mono- und/oder Dicarbonsäuren,
d) 1 bis 3 Gew.-% Amide $\alpha,\beta$-monoolefinisch ungesättigter 3 bis 5 C-Atome enthaltender Mono- und/oder Dicarbonsäuren,
e) 1 bis 4 Gew.-% N-Methylolamide von $\alpha,\beta$-monoolefinisch ungesättigten 3 bis 5 C-Atomen enthaltenden Mono- und/oder Dicarbonsäuren oder deren Alkyläther und
f) 1 bis 3 Gew.-% Acryl- und/oder Methacrylsäuremonoester von 2 bis 6 C-Atome enthaltenden Alkandiolen

einpolymerisiert enthalten und die Dispersionen als Emulgator 0,1 bis 0,8 Gew.-%, bezogen auf die Emulsionscopolymerisate, 12 bis 16 C-Atome in den Alkylgruppen aufweisende Alkylbenzolsulfonate und/oder Fettalkoholsulfonate enthalten.

2. Verwendung der Dispersionen gemäß Anspruch 1 als Bindemittel für wäßrige Korrosionsschutzfarben.

## Claims

1. An aqueous low-emulsifier dispersion of a carboxylcontaining butadiene-styrene emulsion copolymer, wherein the emulsion copolymer contains, as copolymerized units,

a) from 35 to 55% by weight of butadiene,
b) from 35 to 60% by weight of styrene,
c) from 1 to 3% by weight of $\alpha,\beta$-monoolefinically unsaturated monocarboxylic acids and/or dicarboxylic acids of 3 to 6 carbon atoms,
d) from 1 to 3% by weight of amides of $\alpha,\beta$-monoolefinically unsaturated monocarboxylic acids and/or dicarboxylic acids of 3 to 5 carbon atoms,
e) from 1 to 4% by weight of N-methylolamides of $\alpha,\beta$-monoolefinically unsaturated monocarboxylic acids and/or dicarboxylic acids of 3 to 5 carbon atoms, or their alkyl ethers, and
f) from 1 to 3% by weight of acrylic acid and/or methacrylic acid monoesters of alkanediols of 2 to 6 carbon atoms,

and the dispersion contains, as emulsifier, from 0.1 to 0.8% by weight, based on the emulsion copolymer, of alkylbenzenesulfonates where alkyl is of 12 to 16 carbon atoms, and/or fatty alcohol-sulfonates.

2. The use of a dispersion as claimed in claim 1 as binder for aqueous anti-corrosive paints.

## Revendications

1. Dispersions aqueuses pauvres en émulsionnant de copolymères butadiène-styrène à groupes carboxyle, préparés par une polymérisation en émulsion, caractérisées en ce que les copolymères sont préparés par une copolymérisation en émulsion de (pourcentages en poids):

a) 35 à 55% de butadiène
b) 35 à 60% de styrène
c) 1 à 3% d'acides mono- et(ou) di-carboxyliques en $C_3$ à $C_6$ à insaturation $\alpha,\beta$-mono-oléfinique
d) 1 à 3% d'amides d'acides mono- et(ou) di-carboxyliques en $C_3$ à $C_5$ à insaturation $\alpha,\beta$-monooléfinique
e) 1 à 4% de N-méthylol-amides d'acides mono- et(ou) di-carboxyliques en $C_3$ à $C_5$ à insaturation $\alpha,\beta$-mono-oléfinique ou d'éthers d'alcoyle de ceux-ci

f)  1 à  3% de mono-esters de l'acide acrylique et(ou) de l'acide méthacrylique et d'alcane-diols en C$_2$ à C$_6$,

les dispersions contenant en tant qu'émulsionnant entre 0,1 et 0,8% du poids du copolymère de sulfonates d'alcools gras et(ou) d'alcoyl-benzène-sulfonates à radicaux alcoyle en C$_{12}$ à C$_{16}$.

2. Utilisation des dispersions suivant la revendication 1 comme liants dans des pentures anti-corrosives aqueuses.